# DEMANDE DE BREVET EUROPEEN

(11) **EP 1 004 866 A1**
(43) Date de publication de la demande: **31.05.2000**
(21) Numéro de dépôt: 99402887.6
(22) Date de dépôt: 22.11.1999
(51) Int. Cl.: G01M 3/22

(54) **Procédé et dispositif de détection de fuites sur échangeurs automobiles**

(30) Priorité: 26.11.1998 FR 9814879
(71) Demandeur: ALCATEL, 75008 Paris (FR)
(72) Inventeur: Seigeot, Bertrand, 74230 Dingy Saint Clair (FR)
(74) Mandataire: Lamoureux, Bernard

(57) **Abrégé**

Selon l'invention, le contrôle de présence de fuites est effectué en plaçant l'échangeur (1) à contrôler dans une chambre de test étanche (24), en raccordant l'échangeur (1) à un dispositif de pressurisation (17) réalisant dans la cavité interne (2) de l'échangeur (1) une pression d'air appropriée, en faisant le vide autour de l'échangeur (1) dans la chambre de test étanche (24) à l'aide d'un système de pompage (26), et en détectant la présence d'hélium autour de l'échangeur (1) dans la chambre de test étanche (24) par un détecteur de fuites hélium (30). Le contrôle s'effectue en utilisant l'hélium naturellement présent dans l'air. On améliore ainsi la disponibilité machine et la fiabilité du test d'étanchéité, tout en supprimant les contraintes et les coûts liés au gaz traceur.

## Description

La présente invention concerne le contrôle de l'étanchéité des échangeurs automobiles, permettant de mettre au rebut les échangeurs présentant des fuites supérieures à un seuil prédéterminé.

L'invention peut s'appliquer à tout échangeur automobile, comprenant les radiateurs de refroidissement du moteur, les radiateurs de chauffage pour l'habitacle du véhicule, les refroidisseurs air-air pour l'admission des moteurs turbocompressés, les refroidisseurs d'huile, les refroidisseurs d'essence, et de manière générale tous les échangeurs thermiques utilisés dans les véhicules automobiles.

A l'heure actuelle, le contrôle d'étanchéité des échangeurs automobiles se fait en utilisant plusieurs procédés possibles, choisis en fonction du type de fuite recherché.

Un premier procédé consiste à plonger l'échangeur dans un liquide tel que l'eau, et à mettre sa cavité interne sous pression d'air, en recherchant l'apparition de bulles sortant de l'échangeur et traversant le liquide. Les résultats obtenus dépendent sensiblement de l'attention de l'opérateur. Les pièces contrôlées doivent ensuite être séchées, ce qui ralentit le cycle de contrôle. La traçabilité des opérations n'est pas possible.

Selon un second procédé, on établit dans la cavité interne de l'échangeur une surpression déterminée ; on obture l'échangeur et l'on mesure l'évolution de sa pression interne dans le temps. En cas de fuite, la pression diminue, et la mesure de cette diminution de pression permet d'en déduire la valeur des fuites. Ce procédé présente une sensibilité limitée. Un temps de test de l'ordre de 30 secondes est nécessaire pour tester une pièce de volume intérieur de 1 litre avec une sensibilité de quelques centimètres cubes par minute. Le résultat dépend également des variations de température et de volume de l'échangeur.

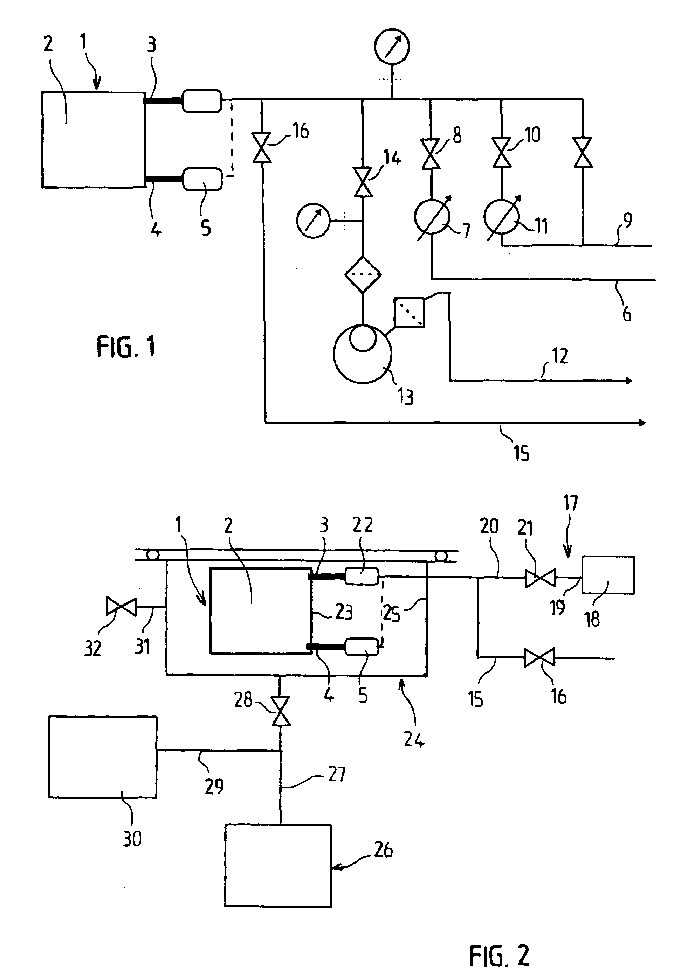

Selon un troisième procédé, on utilise un test à l'hélium. Pour cela, on place l'échangeur à tester dans une enceinte étanche connectée à un détecteur de fuites hélium, et on raccorde l'échangeur à un dispositif de pressurisation tel qu'illustré sur la figure 1. On établit alors à l'intérieur de la cavité interne de l'échangeur une pression d'air de l'ordre de 2.10³ à 10.10³ hPa, dépendant du type d'échangeur, et on recherche les grosses fuites en mesurant la variation de pression interne de l'échangeur. En cas d'absence de grosse fuite, on ramène la pression interne de l'échangeur à la pression atmosphérique, puis on évacue l'air intérieur jusqu'à une pression faible, par exemple de l'ordre de 10 hPa, pour introduire ensuite dans la cavité interne de l'échangeur de l'hélium jusqu'à une pression de l'ordre de 10³ hPa. On recherche alors la présence de grosses fuites en détectant la présence ponctuelle d'hélium autour de l'échangeur automobile dans la chambre de test étanche, à l'aide du détecteur de fuites hélium. La détection doit être faite pour des concentrations d'hélium bien supérieures à la concentration naturelle de l'hélium dans l'air. On établit ensuite à l'intérieur de l'échangeur une pression d'hélium de l'ordre de 2.10³ à 10.10³ hPa, et l'on recherche les petites fuites en détectant la présence éventuelle d'hélium autour de l'échangeur automobile dans la chambre de test, selon un niveau nettement supérieur à la concentration naturelle d'hélium dans l'air. On réduit ensuite la pression de la cavité interne de l'échangeur en dessous de la pression atmosphérique, on déconnecte l'échangeur et on le retire de la chambre de test.

Parmi les procédés mentionnés ci-dessus, le test à l'hélium est le plus fiable, le plus précis et le plus sensible. Toutefois, il présente plusieurs inconvénients. Tout d'abord, il faut approvisionner le gaz traceur hélium, selon des concentrations généralement de 10 à 100 %, et ce gaz est consommable. Cela augmente sensiblement le coût du test. Ensuite, après une exposition massive d'hélium, il est nécessaire d'immobiliser la machine pendant un temps suffisant pour lui permettre de se dépolluer. Egalement, ce test manque de fiabilité car il conduit assez souvent à rejeter à tort des pièces correctes. En effet, lors du test d'un échangeur défectueux présentant des fuites, de l'hélium s'échappe dans la chambre de test. Après retrait de l'échangeur défectueux, de l'hélium résiduel peut rester dans la chambre de test, perturbant la mesure ultérieure des fuites pour un autre échangeur en faisant croire à la présence de fuites dans cet autre échangeur.

Le problème proposé par la présente invention est de concevoir un nouveau procédé et un nouveau dispositif de contrôle d'étanchéité des échangeurs automobiles, présentant une aussi bonne sensibilité que le test à l'hélium traditionnel, tout en évitant les inconvénients du coût du consommable hélium, en évitant le temps d'immobilisation machine pour dépolluer la machine après une exposition massive d'hélium, et en évitant les rebuts intempestifs résultant de la détection d'hélium résiduel.

Pour atteindre ces buts ainsi que d'autres, l'invention prévoit un procédé de détection de fuites sur échangeurs automobiles comportant une paroi périphérique entourant une cavité interne, le procédé comprenant une étape au cours de laquelle on établit une pression appropriée d'air dans la cavité interne de l'échangeur, on établit un vide approprié autour de la paroi périphérique de l'échangeur, et on détecte la concentration d'hélium autour de la paroi périphérique de l'échangeur à l'aide d'un détecteur de fuites hélium. Le détecteur de fuites hélium mesure ainsi la fuite de l'échangeur grâce à la concentration naturelle d'hélium présente dans l'air comprimé.

Selon une réalisation pratique, l'échangeur est placé dans une chambre de test étanche raccordée au détecteur de fuites hélium et raccordée à un groupe de pompage établissant ledit vide approprié, et la cavité interne de l'échangeur est raccordée à un dispositif de pressurisation en air établissant ladite pression d'air appropriée.

Pour améliorer la fiabilité de détection des fuites, la chambre de test étanche peut avantageusement présenter une qualité d'étanchéité nettement supérieure à la qualité d'étanchéité à contrôler de l'échangeur.

Egalement, la pression appropriée d'air peut avantageusement être de l'ordre de 6.10³ hPa, et la pression d'air dans le vide approprié peut avantageusement être inférieure à 10⁻² Pa environ. Ces valeurs sont indicatives, et dépendent de la sensibilité demandée, de la cadence de test et du volume de la chambre de test.

Un dispositif selon l'invention, pour la détection de fuites sur échangeurs automobiles à paroi périphérique entourant une cavité interne, peut avantageusement comprendre :
- une chambre de test étanche raccordée à un groupe de pompage, et conformée pour recevoir et contenir un échangeur à tester,
- un dispositif de pressurisation et des moyens de raccordement étanche à la cavité interne de l'échangeur,
- un détecteur de fuites hélium raccordé à la chambre de test étanche,
- le dispositif de pressurisation étant alimenté en air et adapté pour produire une pression appropriée d'air dans la cavité interne de l'échangeur,
- le groupe de pompage étant adapté pour établir dans la chambre de test étanche une pression d'air inférieure à une pression de l'ordre de 10⁻² Pa.

En pratique, le dispositif de pressurisation peut comprendre :
- une source d'air comprimé produisant à sa sortie de l'air comprimé à pression appropriée,
- une canalisation de conduction d'air comprimé connectée à la sortie de la source d'air comprimé et munie d'une vanne d'entrée et d'un embout de sortie connectable à l'échangeur à tester,
- une canalisation d'échappement d'air équipée d'une vanne d'échappement d'air et adaptée pour mettre sélectivement en communication la cavité interne de l'échangeur avec l'atmosphère extérieure.

On peut ainsi utiliser un dispositif de pressurisation dont la structure est particulièrement simple et peu onéreuse.

Pour réaliser le vide autour de l'échangeur à tester, la chambre de test étanche peut être reliée au groupe de pompage par une canalisation de pompage équipée d'une vanne d'arrêt et d'une dérivation vers le détecteur de fuites hélium, et la chambre de test étanche peut être reliée à l'atmosphère extérieure par une canalisation d'entrée d'air équipée d'une vanne d'entrée d'air.

La chambre de test étanche peut de préférence être adaptée pour présenter une qualité d'étanchéité nettement supérieure à la qualité d'étanchéité à contrôler de l'échangeur.

D'autres objets, caractéristiques et avantages de la présente invention ressortiront de la description suivante de modes de réalisation particuliers, faite en relation avec les figures jointes, parmi lesquelles:
- la figure 1 illustre le schéma de pressurisation pour un test à l'hélium traditionnel ; et
- la figure 2 illustre le schéma de principe d'un dispositif de détection de fuites selon un mode de réalisation de la présente invention.

La figure 1 est destinée à illustrer la relative complexité d'un dispositif de pressurisation qu'il est nécessaire d'utiliser pour la mise en oeuvre d'un test traditionnel avec hélium.

Dans un tel procédé de test, l'échangeur 1, comprenant une cavité interne 2 étanche, comprend de manière traditionnelle une canalisation d'entrée 3 et une canalisation de sortie 4. On obture la canalisation de sortie 4 par une obturation 5. En alternative, on peut relier la canalisation de sortie 4 à la canalisation d'entrée 3, pour augmenter les flux de gaz et ainsi diminuer les temps de test. On raccorde la canalisation d'entrée 3 à un ensemble de canalisations comprenant :
- une canalisation d'entrée d'air sous pression 6, munie d'un régulateur de pression 7 et d'une vanne d'entrée d'air sous pression 8,
- une canalisation d'arrivée d'hélium sous pression 9 munie d'au moins une vanne d'arrivée d'hélium sous pression 10 et d'un régulateur de pression 11,
- une canalisation d'évacuation d'air 12 munie d'une pompe primaire 13 et d'une vanne d'évacuation d'air 14 pour produire un vide d'environ 10 hPa, et une canalisation d'échappement d'air ou d'hélium 15 munie d'une vanne d'échappement 16.

Tous les éléments de ce dispositif sont nécessaires pour réaliser les étapes du procédé de test traditionnel à l'hélium tel que décrit précédemment. Il est possible de simplifier ce dispositif, mais au détriment de certaines performances.

Selon l'invention, le contrôle d'étanchéité de l'échangeur est réalisé au moyen d'un dispositif dont le schéma de principe est illustré sur la figure 2. On retrouve, sur cette figure, l'échangeur 1 ayant une cavité interne 2 fermée par une paroi périphérique 23 ayant une canalisation d'entrée 3 et une canalisation de sortie 4. On obture la canalisation de sortie 4 par une obturation 5. On raccorde la canalisation d'entrée 3 à un dispositif de pressurisation 17. Le dispositif de pressurisation 17 illustré sur la figure comprend une source d'air comprimé 18 produisant à sa sortie 19 de l'air comprimé à une pression appropriée de test. La pression d'air généralement utilisée est comprise entre 2.10³ et 10.10³ hPa, selon les conditions de test habituellement utilisées par les constructeurs automobiles. Une canalisation de conduction d'air comprimé 20 est connectée à la sortie 19 de la source d'air comprimé 18 et est munie d'une vanne d'entrée 21 et d'un embout de sortie 22 connectable à l'échangeur 1 à tester. Sur la figure, on a illustré la connexion de l'embout de sortie 22 sur la canalisation d'entrée 3 de l'échangeur 1.

Une canalisation d'échappement d'air 15, équipée d'une vanne d'échappement d'air 16, est adaptée pour mettre sélectivement en communication la cavité interne 2 de l'échangeur 1 avec l'atmosphère extérieure. Par exemple, comme illustré sur la figure, la canalisation d'échappement d'air 15 se raccorde en un tronçon intermédiaire de la canalisation de conduction d'air comprimé 20, entre la vanne d'entrée 21 et l'embout de sortie 22.

Ainsi, le dispositif de pressurisation 17 est alimenté en air et est adapté pour produire une pression appropriée d'air dans la cavité interne 2 de l'échangeur 1.

On prévoit une chambre de test étanche 24, comportant une paroi périphérique 25 munie d'une porte étanche non représentée sur la figure, et conformée pour recevoir et contenir l'échangeur 1 à tester. La canalisation de conduction d'air comprimé 20 traverse de façon étanche la paroi périphérique 25 de la chambre de test étanche 24, et constitue ainsi un moyen de raccordement étanche à la cavité interne 2 de l'échangeur 1.

La chambre de test étanche 24 est raccordée à un groupe de pompage 26 par une canalisation de pompage 27 équipée d'une vanne d'arrêt 28 et d'une dérivation 29 vers un détecteur de fuite hélium 30. Par ailleurs, la chambre de test étanche 24 est reliée à l'atmosphère extérieure par une canalisation d'entrée d'air 31 équipée d'une vanne d'entrée d'air 32. La chambre de test étanche 24 est adaptée pour présenter une qualité d'étanchéité nettement supérieure à la qualité d'étanchéité à contrôler de l'échangeur 1.

Pour contrôler l'étanchéité de l'échangeur 1, on place l'échangeur 1 dans la chambre de test étanche 24, on obture sa canalisation de sortie 4 par l'obturation 5, et on raccorde sa canalisation d'entrée 3 à l'embout de sortie 22 du dispositif de pressurisation 17. La vanne d'échappement d'air 16 est fermée. De même, la vanne d'entrée d'air 32 est fermée. En ouvrant la vanne d'arrêt 28, et en actionnant le groupe de pompage 26, on établit dans la chambre de test étanche 24 autour de l'échangeur 1 un vide approprié. En ouvrant la vanne d'entrée 21, on établit une pression appropriée d'air dans la cavité interne 2 de l'échangeur 1. A l'aide du détecteur de fuites hélium 30, on détecte alors la concentration d'hélium autour de la paroi périphérique 23 de l'échangeur 1.

La plupart des échangeurs automobiles demandent des niveaux d'étanchéité compris entre 0,5 et 5 cm³ d'air par minute lorsqu'ils sont soumis à une pression de test donnée, en général entre 2.10³ et 10.10³ hPa. Les radiateurs de chauffage sont les plus exigeants en sensibilité. Les radiateurs de refroidissement sont les moins exigeants.

Cette fuite d'air à détecter correspond à une fuite hélium 200 000 fois plus faible, étant donné que la concentration naturelle d'hélium dans l'air est d'environ 5.10⁻⁶.

Le niveau limite de fuite à rechercher se situe donc entre 4.10⁻⁹ et 4.10⁻⁸ Pa.m³/s en hélium. On choisit donc un détecteur de fuite hélium 30 capable de détecter un tel niveau de fuite. Il existe actuellement sur le marché un grand nombre de tels détecteurs de fuites hélium pouvant convenir, comprenant un spectromètre de masse.

Pour éviter de perturber la mesure par la présence de l'hélium résiduel provenant de l'air initialement présent à l'intérieur de la chambre de test étanche 24, il est nécessaire de réaliser dans la chambre de test étanche 24 un vide suffisamment poussé. En pratique, le groupe de pompage 26 sera choisi pour établir dans la chambre de test étanche 24 une pression partielle d'air inférieure à 10⁻² Pa. Un tel groupe de pompage 26 peut par exemple être réalisé en mettant en série deux roots avec une pompe à palettes bi-étagée.

On comprend que le schéma de pressurisation qu'il faut utiliser selon la présente invention est nettement plus simple que le schéma de pressurisation nécessaire selon la figure 1 dans un procédé de test à l'hélium traditionnel.

L'invention permet également une meilleure disponibilité de machine car il n'y a pas de temps perdu en dépollution.

La fiabilité du contrôle est améliorée, car le contrôle d'un échangeur défectueux n'influence pas le contrôle ultérieur des autres échangeurs.

L'invention permet d'éviter la consommation de gaz hélium traceur, et le temps perdu à manipuler les bouteilles de gaz.

Egalement, le procédé de contrôle selon l'invention s'effectue en une seule étape, et ne nécessite pas de contrôle préalable de grosse fuite. Il en résulte que la cadence de contrôle sera limitée uniquement par les performances du groupe de pompage 26.

Pour les cadences de contrôle élevées, on pourra trouver avantage à utiliser un système à double chambre pour le test, permettant de faire le chargement/déchargement des pièces en temps masqué.

Un avantage très important du procédé de l'invention est que quelque soit la taille de la fuite, il n'y aura aucun phénomène de pollution du système avec le gaz traceur. La seule précaution à prendre pour la fiabilité du contrôle sera de vérifier que l'air comprimé utilisé pour le contrôle ne peut être affecté par une concentration d'hélium anormale.

On peut s'affranchir dans le procédé selon l'invention d'effectuer un contrôle de grosse fuite. On peut ainsi pressuriser directement la pièce avec la pression de contrôle finale en air dès que l'on commence à évacuer la chambre de test.

En ce qui concerne l'étanchéité à prévoir de la chambre de test étanche 24, si par exemple on recherche une fuite de 10⁻³ Pa.m³/s, il faudra une qualité d'étanchéité de la chambre de test étanche 24 d'au moins 10⁻⁴ Pa.m³/s.

La présente invention n'est pas limitée aux modes de réalisation qui ont été explicitement décrits, mais elle en inclut les diverses variantes et généralisations qui sont à la portée de l'homme du métier.

## Revendications

1. Procédé de détection de fuites sur échangeurs automobiles (1) comportant une paroi périphérique (23) entourant une cavité interne (2), caractérisé en ce qu'il comprend une étape au cours de laquelle on établit une pression appropriée d'air dans la cavité interne (2) de l'échangeur (1), on établit un vide approprié autour de la paroi périphérique (23) de l'échangeur (1), et on détecte la concentration d'hélium autour de la paroi périphérique (23) de l'échangeur (1) à l'aide d'un détecteur de fuites hélium (30).

2. Procédé selon la revendication 1, caractérisé en ce que l'échangeur (1) est placé dans une chambre de test étanche (24) raccordée au détecteur de fuites hélium (30) et raccordée à un groupe de pompage (26) établissant ledit vide approprié, et la cavité interne (2) de l'échangeur (1) est raccordée à un dispositif de pressurisation (17) en air établissant ladite pression d'air appropriée.

3. Procédé selon la revendication 2, caractérisé en ce que la chambre de test étanche (24) présente une qualité d'étanchéité nettement supérieure à la qualité d'étanchéité à contrôler de l'échangeur (1).

4. Procédé selon l'une quelconque des revendications 1 à 3, caractérisé en ce que la pression appropriée d'air est d'environ 6.10³ hPa, et la pression d'air dans le vide approprié est inférieure à 10⁻² Pa.

5. Dispositif de détection de fuites sur échangeurs automobiles (1) à paroi périphérique (23) entourant une cavité interne (2), pour la mise en oeuvre d'un procédé selon l'une quelconque des revendications 1 à 4, comprenant :
- une chambre de test étanche (24) raccordée à un groupe de pompage (26), et conformée pour recevoir et contenir un échangeur (1) à tester,
- un dispositif de pressurisation (17) et des moyens de raccordement étanche (20) à la cavité interne (2) de l'échangeur (1),
- un détecteur de fuites hélium (30) raccordé à la chambre de test étanche (24),
caractérisé en ce que :
- le dispositif de pressurisation (17) est alimenté en air et est adapté pour produire une pression appropriée d'air dans la cavité interne (2) de l'échangeur (1),
- le groupe de pompage (26) est adapté pour établir dans la chambre de test étanche (24) une pression d'air inférieure à 10⁻² Pa.

6. Dispositif selon la revendication 5, caractérisé en ce que le dispositif de pressurisation (17) comprend :
- une source d'air comprimé (18) produisant à sa sortie (19) de l'air comprimé à pression appropriée,
- une canalisation de conduction d'air comprimé (20) connectée à la sortie (19) de la source d'air comprimé (18) et munie d'une vanne d'entrée (21) et d'un embout de sortie (22) connectable à l'échangeur (1) à tester,
- une canalisation d'échappement d'air (15) équipée d'une vanne d'échappement d'air (16) et adaptée pour mettre sélectivement en communication la cavité interne (2) de l'échangeur (1) avec l'atmosphère extérieure.

7. Dispositif selon l'une des revendications 5 ou 6, caractérisé en ce que la chambre de test étanche (24) est reliée au groupe de pompage (26) par une canalisation de pompage (27) équipée d'une vanne d'arrêt (28) et d'une dérivation (29) vers le détecteur de fuites hélium (30), et la chambre de test étanche (24) est reliée à l'atmosphère extérieure par une canalisation d'entrée d'air (31) équipée d'une vanne d'entrée d'air (32).

8. Dispositif selon l'une quelconque des revendications 5 à 7, caractérisé en ce que la chambre de test étanche (24) est adaptée pour présenter une qualité d'étanchéité nettement supérieure à la qualité d'étanchéité à contrôler de l'échangeur (1) .
